# EUROPÄISCHE PATENTSCHRIFT

(11) **EP 3 670 468 B1**
(45) Veröffentlichungstag und Bekanntmachung des Hinweises auf die Patenterteilung: **24.11.2021**
(21) Anmeldenummer: 18215395.7
(22) Anmeldetag: 21.12.2018
(51) Int. Cl.: C04B 7/28, C04B 18/14

(54) **VERFAHREN ZUR GEWINNUNG EINES SEKUNDÄRROHSTOFFS FÜR DIE ZEMENTPRODUKTION UND ZEMENTWERK**
METHOD FOR OBTAINING A SECONDARY RAW MATERIAL FOR THE PRODUCTION OF CEMENT AND CEMENT PLANT
PROCÉDÉ D'OBTENTION D'UNE MATIÈRES PREMIÈRE SECONDAIRE POUR LA PRODUCTION DE CIMENT ET CIMENTERIE

(43) Veröffentlichungstag der Anmeldung: 24.06.2020
(73) Patentinhaber: Scheuch GmbH, 4971 Aurolzmünster (AT); SCHWENK Zement KG, 89522 Heidenheim-Mergelstetten (DE)
(72) Erfinder: FELLNER, Thomas, 5145 Neukirchen (AT); LISBERGER, Manfred, 4714 Meggenhofen (AT); HERMANDINGER, Alois, 5211 Lengau (AT); KASCHKE, Tobias, 89522 Heidenheim a.d. Brenz (DE); WASSING, Walter, 86316 Friedberg (DE); BERTO, Tobias, 89073 Ulm (DE)
(74) Vertreter: SONN Patentanwälte OG

(56) Entgegenhaltungen:
- GB-A- 1 527 485
- JP-A- H11 309 428
- JP-A- H11 319 762

## Beschreibung

Die Erfindung betrifft ein Verfahren zum Verwerten eines phosphorhaltigen Ausgangsstoffes bei der Zementklinker- und/oder Zementproduktion in einem Zementwerk. Weiters betrifft die Erfindung ein Zementwerk zur Zementproduktion.

Die JP H11 309428 A beschreibt ein Verfahren zur Entphosphorisierung von Asche, um diese als Ausgangsstoff zur Zementherstellung verwenden zu können. Dabei wird eine Kohlenstoffquelle wie Koks, Graphit oder Aktivkohle mit einer phosphorhaltigen Verbrennungsasche wie Klärschlamm-Asche vermischt und zerkleinert. Anschließend wird das Granulat in einen von außen auf 1000-1250°C erwärmten Ofen gegeben, der eine reduzierende Atmosphäre aufweist. Dabei werden phosphorhaltige Verbindungen in der Asche zu elementarem Phosphor reduziert, wobei der elementare Phosphor durch die Erwärmung im Ofen als Phosphordampf verflüchtigt wird. Danach wird die Asche, aus der der Phosphor entfernt wurde, aus dem Ofen ausgetragen. Durch das Verfahren wird die behandelte Asche im Phosphorgehalt deutlich reduziert und so modifiziert, dass sie als Zementquelle genutzt werden kann. Andererseits wird das Abgas des Ofens, das den verdampften Phosphor enthält, einer Abgasbehandlungsstufe zur Entfernung des Phosphors zugeführt.

Die JP H11 319762 A zeigt ein Verfahren zur Gewinnung von Phosphor, bei der eine Kohlenstoffquelle ebenfalls mit phosphorhaltiger Verbrennungsasche vermischt und zerkleinert und die granulierte Mischung in einem geschlossenen Ofen bei 1000-1250°C erwärmt wird. Bei einer reduzierenden Atmosphäre entsteht im Ofen elementarer Phosphor, der gasförmig über das Abgas des Ofens bei mindestens 300°C ausgetragen wird. Das phosphorhaltige Abgas des Ofens wird mit Sprühwasser gekühlt, um den Phosphor zu kondensieren und in einem Phosphorspeicher zu sammeln.

Die GB 1 527 485 offenbart ein feinteiliges, trockenes und inertes Produkt, das als Ersatz eines Teils des Portlandzements in Zementmischungen und auch als inerter Füllstoff verwendbar ist. Das Produkt besteht aus Flugasche mit zerkleinerten Flugaschepartikeln und ist im Wesentlichen frei von Kohlenstoff.

Um den Primärbrennstoffeinsatz zu substituieren und den Rohmaterialeinsatz zu reduzieren, kann bei der Herstellung von Zementklinker und der Zementproduktion auf alternative Brennstoffe und alternative Rohmaterialien zurückgegriffen werden. Die alternativen Brennstoffe können hierbei einen hohen Glührückstand, wie dies beispielsweise bei getrocknetem Klärschlamm und Tiermehl der Fall ist, und/oder einen hohen Wassergehalt, wie beispielsweise bei entwässertem Klärschlamm und Blutmehl, aufweisen. Dabei kommen vor allem auch phosphorhaltige Sekundärrohstoffe und -brennstoffe (im Folgenden Sekundärrohstoffe genannt) zum Einsatz. Nach optionaler Trocknung mit aus der Zementklinkerproduktion stammender Restwärme erfolgt die thermische Verwertung der Sekundärrohstoffe in einer Drehofenanlage des Zementwerks. Die Aufgabe der Sekundärrohstoffe erfolgt in Abhängigkeit vom Heizwert und der chemischen Zusammensetzung optional am Brenner, am Klinkerkühler, am Ofeneinlauf, am Steigschacht oder am Kalzinator des Drehrohrofens. Gewöhnlich werden die bei der thermischen Verwertung bzw. Mitverbrennung der Sekundärstoffe entstehenden Rückstände zu Zementklinkerphasen umgesetzt. Nachteilig bei der Mitverbrennung ist, insbesondere bei Klärschlamm, dass die nicht brennbaren Rückstände aus vielen unterschiedlichen Elementen, insbesondere Silizium (Si), Eisen (Fe), Aluminium (Al), Calcium (Ca) und/oder Phosphor (P), zusammengesetzt sind und in ihrem prozentualen Anteil in Abhängigkeit von der Bezugsquelle und/oder dem zeitlichen Verlauf stark variieren. In Abhängigkeit von der Zusammensetzung des nichtbrennbaren Rückstandes können bei gleicher mineralogischer Rohmehlzusammensetzung Zementklinker mit unterschiedlicher Phasenzusammensetzung entstehen. Da die chemische und mineralogische Zusammensetzung der Verbrennungsrückstände für den jeweiligen Produktionszeitraum nicht bekannt ist, kann die Phasenzusammensetzung des Zementklinkers nicht gezielt gesteuert werden. Dies kann die Qualität des Zementklinkers mindern und/oder den prozentualen Einsatz der Sekundärstoffe bezogen auf das aufgegebene Rohmehl begrenzen. Des Weiteren werden für jegliches Leben unabdingbare Elemente wie Phosphor der Biosphäre entzogen und unter qualitätsneutraler oder -mindernder Wirkung in die Zementklinkermatrix eingebaut.

Vereinzelt wurde vorgeschlagen, den bei der prozessintegrierten thermischen Verwertung der Sekundärstoffe entstehenden Rückstand selektiv auszuschleusen. Die WO 2011/080558 beschreibt hierzu ein Verfahren zum Verwerten von phosphorhaltigen alternativen Brennstoffen, z.B. Klärschlamm, bei der Zementklinkerherstellung. Hierbei wird die Abwärme aus dem Zementklinkerherstellungsprozess zur Thermolyse des eingesetzten Brennstoffes in einem Thermolysereaktor genützt. Die im phosphorhaltigen alternativen Brennstoff vorhandenen Schwermetalle werden mittels Zementofen-Bypassprodukten in Form von Schwermetallhalogeniden ausgetragen und die phosphorhaltigen und schwermetallfreien Thermolyserückstände beispielweise als Dünger genützt. Die bei diesem Verfahren freiwerdende Energie in Form von Brenngas oder Abwärme wird dem Zementklinkerherstellungsprozess zugeführt. Nachteilig ist jedoch, dass in der Zementklinkerherstellung nur die freiwerdende Energie des Thermolyseprozesses genutzt wird und die Rückstände des phosphorhaltigen Stoffes in der Zementproduktion keine Verwendung finden. Eine reststofffreie Verwertung der Sekundärrohstoffe im Zementherstellungsprozess ist somit nicht realisiert. Darüber hinaus hat sich gezeigt, dass die Thermolyserückstände als Dünger kaum geeignet sind. Im Feldversuch haben diese Thermolyserückstände wenig bis gar keine Düngewirkung entfaltet. Dies liegt daran, dass der Phosphor an den Thermolyserückständen so stark gebunden ist, dass die Pflanzen den Phosphor nicht herauslösen können.

Die Aufgabe der vorliegenden Erfindung besteht darin, zumindest einzelne Nachteile des Standes der Technik zu lindern bzw. zu beheben. Die Erfindung setzt sich insbesondere zum Ziel, ein Verfahren zum Verwerten eines phosphorhaltigen Ausgangsstoffes bei der Zementproduktion und ein entsprechendes Zementwerk zu schaffen, bei welchem der phosphorhaltige Ausgangsstoff mit geringem Energieaufwand bestmöglich verwertet wird.

Bei dem erfindungsgemäßen Verfahren werden zumindest die folgenden Schritte durchgeführt:
i. Erhitzen einer phosphorhaltigen Asche- und/oder Schlackefraktion auf zumindest 1250 °C, vorzugsweise zumindest 1300 °C, besonders bevorzugt zumindest 1400 °C, insbesondere im Wesentlichen 1500 °C, zur Bildung eines phosphorhaltigen Materialstroms, insbesondere eines phosphorhaltigen Gasstroms, und im Wesentlichen phosphorfreier Veraschungs- und/oder Verschlackungsrückstände;
ii. Auftrennen des phosphorhaltigen Materialstroms, insbesondere eines phosphorhaltigen Gasstroms, und der im Wesentlichen phosphorfreien Veraschungs- und/oder Verschlackungsrückstände;
iii. Gewinnen von elementarem Phosphor, Phosphorpentoxid und/oder Phosphorsäure aus dem phosphorhaltigen Materialstrom;
iv. Erzeugen einer Eisen-Fraktion aus den im Wesentlichen phosphorfreien Veraschungs- und/oder Verschlackungsrückständen;
   i. Erzeugen einer Si/Ca/Al-Fraktion aus den im Wesentlichen phosphorfreien Veraschungs- und/oder Verschlackungsrückständen, wobei die Elemente Silizium, Calcium und Aluminium in der Si/Ca/Al-haltigen Fraktion (38) als jeweilige Oxide vorliegen, wobei die Si/Ca/Al-haltige Fraktion einen Siliziumoxid-Anteil von weniger als 60 m%, einen Calciumoxid-Anteil von mehr als 25 m% und einen Aluminiumoxid-Anteil von weniger als 30 m%, bezogen auf die Gesamtmenge
v. der Si/Ca/Al-haltigen Fraktion, aufweist, wobei die Summe der Massenanteile des Silizium-, des Calcium- und des Aluminiumoxids mehr als 55 m%, bezogen auf die Gesamtmenge der Si/Ca/Al-haltigen Fraktion (38), ist;
vi. Verwenden eines ersten Anteils der Si/Ca/Al-haltigen Fraktion als erster Sekundärrohstoff für die Zementproduktion; und
vii. Verwenden eines ersten Anteils der Eisen-Fraktion (37) als zweiter Sekundärrohstoff für die Zementproduktion.

Das erfindungsgemäße Zementwerk weist zumindest auf:
- eine Anlage zur Herstellung von Zement aus Zementklinker;
- einen Reaktor zur Bildung eines phosphorhaltigen Materialstroms, insbesondere eines phosphorhaltigen Gasstroms, und im Wesentlichen phosphorfreier Veraschungs- und/oder Verschlackungsrückstände durch Erhitzung einer phosphorhaltigen Asche- und/oder Schlackefraktion aus einem phosphorhaltigen Ausgangsstoff auf zumindest 1250 °C, vorzugsweise zumindest 1300 °C, besonders bevorzugt zumindest 1400 °C, insbesondere im Wesentlichen 1500 °C;
- eine erste Ableitung für den phosphorhaltigen Materialstrom, insbesondere phosphorhaltigen Gasstrom, für das Gewinnen von elementarem Phosphor, Phosphorpentoxid und/oder Phosphorsäure aus dem phosphorhaltigen Materialstrom;
- eine zweite Ableitung für die im Wesentlichen phosphorfreien Veraschungs- und/oder Verschlackungsrückstände;
- eine Trenneinrichtung zum Erzeugen jeweils einer Eisen-Fraktion und einer Si/Ca/Al-Fraktion aus den im Wesentlichen phosphorfreien Veraschungs- und/oder Verschlackungsrückständen, wobei die Eisen-Fraktion (37) zumindest 50 m% Eisen aufweist, wobei die Elemente Silizium, Calcium und Aluminium in der Si/Ca/Al-haltigen Fraktion (38) als jeweilige Oxide vorliegen, wobei die Si/Ca/Al-haltige Fraktion einen Siliziumoxid-Anteil von weniger als 60 m%, einen Calciumoxid-Anteil von mehr als 25 m% und einen Aluminiumoxid-Anteil von weniger als 30 m%, bezogen auf die Gesamtmenge der Si/Ca/Al-haltigen Fraktion, aufweist, wobei die Summe der Massenanteile des Silizium-, des Calcium- und des Aluminiumoxids mehr als 55 m%, bezogen auf die Gesamtmenge der Si/Ca/Al-haltigen Fraktion (38), ist
- wobei die Trenneinrichtung mit der Anlage zur Herstellung von Zement verbunden ist, so dass ein erster Anteil der Si/Ca/Al-Fraktion als erster Sekundärrohstoff für die Zementproduktion und ein erster Anteil der Eisen-Fraktion (37) als zweiter Sekundärrohstoff für die Zementproduktion verwendbar ist.

Mit dem erfindungsgemäßen Verfahren kann ein phosphorhaltiger Ausgangsstoff vorzugsweise im Wesentlichen vollständig verwertet werden. Der phosphorhaltige Ausgangsstoff kann dazu genutzt werden, als alternatives Ausgangsmaterial in der Zementproduktion, vorzugsweise zudem bei der Zementklinkerproduktion, die natürlichen Rohstoffe zu ersetzen bzw. zu ergänzen. Somit kann daher der Materialeinsatz für die Zementproduktion verringert werden. Als phosphorhaltiger Ausgangsstoff kann Klärschlamm, Tiermehl, entwässerter Klärschlamm und/oder Blutmehl verwendet werden. Das Auftrennen des phosphorhaltigen Materialstroms, insbesondere phosphorhaltigen Gasstroms, und der im Wesentlichen phosphorfreien Veraschungs- und/oder Verschlackungsrückstände ist einerseits günstig, weil der Phosphor im Zement reduziert wird, so dass die gewünschte Zementqualität zuverlässig erhalten werden kann. Andererseits kann der phosphorhaltige Materialstrom, insbesondere phosphorhaltige Gasstrom, zur Herstellung phosphorhaltiger Produkte, insbesondere für die Düngemittelproduktion, genutzt werden. Anders als die phosphorhaltigen Thermolyserückstände beim Stand der Technik der WO 2011/080558 eignet sich der Phosphor-Materialstrom in idealer Weise für die Herstellung von Düngemitteln und für andere industrielle Anwendungen. Somit kann der phosphorhaltige Ausgangs- bzw. Sekundärrohstoff optimal verwertet werden. Dafür wird zumindest der erste (nicht-verschwindende) Anteil der Si/Ca/Al-Fraktion der Zementproduktion zugeführt, wohingegen der phosphorhaltige Materialstrom, insbesondere phosphorhaltige Gasstrom, für die Düngemittelproduktion abgezogen (d.h. nicht in den Zement eingebunden) wird. Der erste Anteil der Silizium (Si), Calcium (Ca) und Aluminium (Al) enthaltenden Fraktion von mehr als 0 m%, bevorzugt mehr als 30 m%, besonders bevorzugt mehr als 60 m%, insbesondere mehr als 80 m%, bezogen auf die Gesamtmenge der phosphorfreien Veraschungs- und/oder Verschlackungsrückstände, wird als erster Sekundärrohstoff bei der Zementproduktion verwendet. Damit kann der erste Anteil der Si/Ca/Al-Fraktion als Substitut für die natürlichen Rohstoffe der Zementproduktion herangezogen werden.

Der Reaktor zur Bildung des phosphorhaltigen Materialstroms, insbesondere phosphorhaltigen Gasstroms, einerseits und der im Wesentlichen phosphorfreier Veraschungs- und/oder Verschlackungsrückstände andererseits weist bevorzugt ein Koks- und/oder Graphitbett auf, um die in der phosphorhaltigen Asche- und/oder Schlackefraktion vorhandenen Metalloxide, wie Eisenoxide, zu reduzieren. Die Beheizung des Koks- und/oder Graphitbetts erfolgt bevorzugt induktiv durch eine Spule.

Dabei definiert Asche einen festen Rückstand aus einer Verbrennung eines organischen Materials und Schlacke eine über den Erweichungspunkt erhitzte Asche.

Die Veraschungs- und/oder Verschlackungsrückstände sind im Wesentlichen frei von Phosphor. Bevorzugt wird eine Rückgewinnungsquote bezogen auf den Phosphorgehalt der Ausgangsstoffe von mehr als 50 %, bevorzugt von mehr als 80%, insbesondere mehr als 85 %, erreicht.

Die Elemente Silizium, Calcium und Aluminium liegen in der Si/Ca/Al-haltigen Fraktion als jeweilige Oxide vor. Die Si/Ca/Al-haltige Fraktion weist einen Siliziumoxid-Anteil von weniger als 60 m%, bevorzugt weniger als 50 m%, besonders bevorzugt weniger als 40 m%, einen Calciumoxid-Anteil von mehr als 25 m%, bevorzugt mehr als 30 m%, besonders bevorzugt mehr als 35 m%, insbesondere mehr als 40 m%, und einen Aluminiumoxid-Anteil von weniger als 30 m%, bevorzugt weniger als 27 m%, besonders bevorzugt weniger als 25 m%, bezogen auf die Gesamtmenge der Si/Ca/Al-haltigen Fraktion, auf. Gemäß einer bevorzugten Ausführungsform liegt in der Si/Ca/Al-haltigen Fraktion Silizium als SiO2, Calcium als CaO und/oder Aluminium als Al2O3 vor. Erfindungsgemäß ist die Summe der Massenanteile des Silizium-, des Calcium- und des Aluminiumoxids mehr als 55 m%, bevorzugt mehr als 60 m%, besonders bevorzugt mehr als 66 m%, bezogen auf die Gesamtmenge der Si/Ca/Al-haltigen Fraktion.

Gemäß einer bevorzugten Ausführungsform ist die Basizität der Si/Ca/Al-haltigen Fraktion, die mithilfe des Verhältnisses Gewichtsanteil des Calciumoxid-Anteils mCa zu Gewichtsanteil des Siliziumoxid-Anteils mSi mit der Formel mCa / mSi berechnet wird, größer als 0,8, bevorzugt größer als 0,9, besonders bevorzugt größer als 1.

Gemäß einer weiteren bevorzugten Ausführungsform weist die Si/Ca/Al-haltige Fraktion einen Magnesiumoxid-Anteil auf. Gemäß einer besonders bevorzugten Ausführungsform ist die Basizität der Si/Ca/Al-haltigen Fraktion, die mithilfe des Gewichtsanteils des Calciumoxid-Anteils mCa, des Gewichtsanteils des Magnesiummoxid-Anteils mMg und des Gewichtsanteils des Siliziumoxidanteils mSi, bezogen auf die Gesamtmenge der Si/Ca/Al-haltigen Fraktion, mit der Formel (mCa + mMg) / mSi berechnet wird, größer als 0,8, bevorzugt größer als 0,9, besonders bevorzugt größer als 1.

Neben der Si/Ca/Al-haltigen Fraktion wird aus den phosphorfreien Veraschungs- und/oder Verschlackungsrückständen die eisenreiche Fraktion (kurz: Eisen-Fraktion) abgezweigt, welche erfindungsgemäß zumindest 50 m%, Eisen aufweist. Zu diesem Zweck können die im Wesentlichen phosphorfreien Veraschungs- und/oder Verschlackungsrückstände im flüssigen Zustand einer Dichteseparation und dann einer Granulation unterzogen werden. Nach einer gemeinsamen Erstarrung und anschließendem gemeinsamen Brechen der im Wesentlichen phosphorfreien Veraschungs- und/oder Verschlackungsrückstände kann die eisenreiche Fraktion durch eine magnetische Trennung abgezogen werden.

Gemäß einer bevorzugten Ausführungsform weist das erfindungsgemäße Zementwerk eine Anlage zur Herstellung von Rohmehl und eine Anlage zur Herstellung von Zementklinker auf. Dadurch kann Zementklinker für die Zementproduktion direkt in dem Zementwerk hergestellt werden.

Gemäß einer bevorzugten Ausführungsform wird die phosphorhaltigen Asche- und/oder Schlackefraktion im Zementwerk durch Veraschung bzw. Verschlackung des phosphorhaltigen Ausgangsstoffs gebildet. Bei der Veraschung bzw. Verschlackung können Temperaturen über dem Erweichungspunkt der gebildeten phosphorhaltigen Aschefraktion auftreten, sodass teilweise eine phosphorhaltige Schlackefraktion gebildet wird.

Der erste Anteil der Eisen-Fraktion wird als zweiter Sekundärrohstoff für die Zementproduktion verwendet. Vorteilhafterweise können Eisenkorrekturstoffe, wie Eisenerz, durch den ersten Anteil der eisenreichen Fraktion substituiert werden. Damit können definierte Mengen des im Ausgangsstoff enthaltenen Eisens der Zementproduktion zugeführt werden.

Bei einer weiteren bevorzugten Ausführungsvariante wird der erste Anteil der Si/Ca/Al-Fraktion als Zumahlstoff in eine Zementmühle des Zementwerkes aufgegeben. Diese Variante hat den Vorteil, dass keine zusätzliche thermische Energie zum Aufschmelzen des Veraschungs- und/oder Verschlackungsrückstands erforderlich wird und je nach hydraulischen Bindeeigenschaften der Anteil des Zementklinkers im Zement gesenkt werden kann. Damit gehen CO₂-Einsparungen und auch eine Senkung des Bedarfs an natürlichem Rohmaterial einher.

Je nach Ausführung wird ein zweiter (nicht-verschwindender) Anteil der Si/Ca/Al-Fraktion als dritter Sekundärrohstoff und/oder ein zweiter (nicht-verschwindender) Anteil der Eisen-Fraktion als vierter Sekundärrohstoff
a. auf ein Mischbett des Zementwerkes und/oder
b. in Strömungsrichtung gesehen nach dem Mischbett und vor einer Rohmehlmühle des Zementwerkes und/oder
c. in einen Ofeneinlauf des Drehrohrofens oder in einen Kalzinator des Zementwerkes
aufgegeben.

Bei einer Ausführungsvariante wird der zweite Anteil der Si/Ca/Al-haltigen Fraktion auf ein Mischbett des Zementwerkes aufgegeben. Somit kann der zweite Anteil der Si/Ca/Al-haltigen Fraktion als Mergelsubstitut verwendet werden. Das Mergelsubstitut liegt als Gestein vor. Vorteilhafterweise kann das Mergelsubstitut einen geringeren SO₃-Gehalt und bessere Fließeigenschaften als natürlich vorkommender Mergel aufweisen. Sowohl der hohe SO₃-Gehalt als auch die mangelhaften Fließeigenschaften von natürlichem Mergel sind verfahrenstechnisch nachteilig und können in Abhängigkeit von der Lagerstättenzusammensetzung zu einer asymmetrischen Steinbruchnutzung führen.

Bei einer weiteren Ausführungsvariante wird der dritte und/oder der vierte Sekundärrohstoff aus den im Wesentlichen phosphorfreien Veraschungs- und/oder Verschlackungsrückständen in Strömungsrichtung gesehen nach dem Mischbett und vor einer Rohmehlmühle des Zementwerkes aufgegeben.

Bei einer weiteren Ausführungsvariante wird der dritte und oder der vierte Sekundärrohstoff aus den im Wesentlichen phosphorfreien Veraschungs- und/oder Verschlackungsrückständen in einen Ofeneinlauf des Drehrohrofens oder in einen Kalzinator des Zementwerkes aufgegeben. Diese Variante hat den Vorteil, dass durch die Aufbereitung und Trennung des dritten und vierten Sekundärrohstoffs ein definiertes Granulat erzeugt werden kann und so keine weitere Mahlenergie in der Rohmehlmühle zur Aufarbeitung der Sekundärrohstoffe notwendig wird. Die Granualien werden im Drehrohrofen aufgeschmolzen und direkt in die Klinkermatrix eingebaut.

Bei einer weiteren bevorzugten Ausführungsvariante wird der zweite Anteil der Eisen-Fraktion auf ein Mischbett des Zementwerks aufgegeben. Somit kann der zweite Anteil der Eisen-Fraktion als Eisensubstitut verwendet werden. Diese Variante hat den Vorteil, dass Eisenkorrekturstoffe wie z.B. Eisenerz durch den vierten Sekundärrohstoff substituiert werden können. Weiters kann das im Ausgangsstoff enthaltene Eisen der Zementklinkerproduktion in definierten Mengen zugeführt werden.

Bevorzugt wird die chemische Elementarzusammensetzung des ersten bzw. zweiten Sekundärrohstoffs und/oder des dritten bzw. vierten Sekundärrohstoffs erfasst.

Bei einer bevorzugten Ausführungsvariante wird die chemische Zusammensetzung des zweiten Anteils der Si/Ca/Al-Fraktion mit einer Analysevorrichtung, insbesondere einem Bandanalysator (engl. "belt analyzer") analysiert. Dadurch kann die chemische Zusammensetzung des Mergelsubstituts bei Aufbau des Mischbetts überwacht werden, um in Abhängigkeit davon einen Teil des natürlichen Mergels durch den zweiten Anteil der Si/Ca/Al-haltigen Fraktion zu substituieren.

Bevorzugt werden der erste Anteil der Si/Ca/Al-Fraktion und/oder der erste Anteil der Eisen-Fraktion über Zugabe- und Dosiereinrichtungen in die Anlage zur Zementproduktion eingebracht. Somit können definierte Mengen des ersten bzw. zweiten Sekundärrohstoffs für die Zementproduktion verwendet werden. Damit können die phosphorhaltigen Ausgangsstoffe bestmöglich mit geringem Energieaufwand verwertet werden.

Gemäß einer bevorzugten Ausführungsform ist es günstig, wenn ein weiterer Anteil der Eisen-Fraktion aus dem Zementwerk ausgeschleust wird. Demnach wird eine Auftrennung der Eisen-Fraktion in den ersten Anteil von mehr als 30 m% (jeweils bezogen auf die gesamte eisenreiche Fraktion), insbesondere mehr als 60 m%, vorzugsweise mehr als 80 m%, für die Zementproduktion durchgeführt. Je nach Zementwerk kann der zweite Anteil mehr als 0 m%, insbesondere mehr als 20 m%, betragen. Durch Einstellung des ersten Anteils für die Zementproduktion können die Eigenschaften des Sekundärrohstoffs gezielt beeinflusst werden. Für die Verwertung des ersten Anteils der eisenreichen Fraktion bei der Zementproduktion kann die oben genannte Aufgabestelle im Zementwerk bei der Zementmühle genutzt werden. Für die Verwertung des zweiten Anteils der eisenreichen Fraktion bei der Zementklinkerproduktion können die oben genannten Aufgabestellen im Zementwerk, wie Mischbett oder Rohmehlmühle, genutzt werden. Der weitere Anteil der eisenreichen Fraktion kann der eisenverarbeitenden Industrie zur Verfügung gestellt werden.

Zur Senkung des Energiebedarfs ist es günstig, wenn die Veraschung bzw. Verschlackung des phosphorhaltigen Ausgangsstoffs durch einen bei der Zementklinkerproduktion entstehenden Gasstrom, insbesondere Abgasstrom oder Abluftstrom, zumindest unterstützt wird. Dieser Gasstrom kann beispielsweise vom Klinkerkühler oder von einem Gewebefilter, der der Veraschung bzw. Verschlackung nachgeschaltet ist, stammen. Anschließend kann der Abgasstrom zur Wärmenutzung dem Elektrofilter, der der Rohmehlmühle nachgeschaltet ist, der Rohmehlmühle und/oder einem optionalen Trockner zum Trocknen des phosphorhaltigen Ausgangsstoffs zugeführt werden.

Zur Ausnutzung des Energiegehalts des phosphorhaltigen Ausgangsstoffs wird der phosphorhaltige Ausgangsstoff bevorzugt einer Vergasung unterzogen. Bei der Veraschung bzw. Verschlackung des phosphorhaltigen Ausgangsstoffs wird daher ein Brenngas erzeugt, welches insbesondere Kohlenmonoxid (CO), Wasserstoff (H2), Kohlendioxid (CO2), Methan (CH4), Wasserdampf (H2O), Stickstoff (N2) sowie eine Reihe von organischen Substanzen enthalten kann. Anschließend kann das Brenngas beispielsweise in einem Gasbrenner verfeuert werden, um den Energiegehalt des Brenngases freizusetzen.

Bei einer alternativen Ausführungsform wird der phosphorhaltige Ausgangsstoff einer Verbrennung unterzogen. Bei dieser Variante entsteht ein Abgas, welches für die Trocknung des Rohmehls, des ersten und/oder des zweiten Sekundärrohstoffs genutzt werden kann.

Aus dem phosphorhaltigen Materialstrom, insbesondere dem phosphorhaltigen Gasstrom, wird zumindest eines von elementarem Phosphor, Phosphorpentoxid und/oder Phosphorsäure gewonnen. Bei einer bevorzugten Variante wird aus dem elementaren Phosphor Phosphorpentoxid und/oder Phosphorsäure hergestellt, welche sich jeweils besonders gut für die Düngemittelproduktion eignen. Damit kann insbesondere eine sichere Verwertung des phosphorhaltigen Materialstroms, insbesondere des phosphorhaltigen Gasstroms, gewährleistet werden.

Bevorzugt ist der phosphorhaltige Materialstrom gasförmig. Gemäß einer alternativen Ausführungsform ist der phosphorhaltige Materialstrom flüssig, wobei der phosphorhaltige Materialstrom und die im Wesentlichen phosphorfreien Veraschungs- und/oder Verschlackungsrückstände mithilfe einer Dichtetrennung aufgetrennt werden. Somit können der flüssige phosphorhaltige Materialstrom und die flüssigen im Wesentlichen phosphorfreien Veraschungs- und/oder Verschlackungsrückstände voneinander separiert werden.

Um den Energiebedarf für die Herstellung des im Wesentlichen phosphorfreien Sekundärrohstoffs möglichst gering zu halten, ist es günstig, wenn die phosphorhaltige Asche- und/oder Schlackefraktion auf einer Temperatur von zumindest 300 °C, vorzugsweise zumindest 500 °C, besonders bevorzugt zumindest 700 °C, insbesondere zumindest 900 °C, gehalten wird, bevor die phosphorhaltige Asche- und/oder Schlackefraktion auf zumindest 1250 °C erhitzt wird. Nach der Veraschung bzw. Verschlackung wird die phosphorhaltige Asche- und/oder Schlackefraktion im heißen Zustand gehalten, so dass die Energiemenge für die weitere Erhitzung zur Bildung der im Wesentlichen phosphorfreien Veraschungs- und/oder Verschlackungsrückstände möglichst gering ist.

Für die Aufbereitung der bei der Veraschung bzw. Verschlackung entstehenden, noch phosphorhaltigen Asche- und/oder Schlackefraktion ist es günstig, wenn die phosphorhaltige Asche- und/oder Schlackefraktion vor der Erhitzung auf zumindest 1250 °C mit Ca- und/oder C-Trägern konditioniert wird. Durch die Kohlenstoff-(C)-Träger kann das reduzierende Verhalten der Asche- und/oder Schlackefraktion bei der Erhitzung auf zumindest 1250 °C sichergestellt werden.

Gemäß einer besonders bevorzugten Ausführungsform wird die Konditionierung der phosphorhaltigen Asche- und/oder Schlackefraktion in einem Drehrohr durchgeführt.

Zur Nutzung der Abwärme ist es günstig, wenn die Abgase aus dem Drehrohr zur Vorwärmung und/oder Trocknung des phosphorhaltigen Ausgangsstoffs und/oder zur Erwärmung von Veraschungsluft für die Veraschung bzw. Verschlackung herangezogen wird.

Als Ca- und/oder C-Träger wird bei einer bevorzugten Ausführungsform ein Hilfsstoff aus der Zementproduktion verwendet. Der Hilfsstoff kann ausgewählt sein aus Flugasche, insbesondere mit einem Anteil Restkoks von zumindest 10 m% Bypassstaub, Vorwärmerkalk und/oder Blaukalk.

Weiters kann der Restkohlenstoffgehalt bei der Veraschung bzw. Verschlackung und/oder der Konditionierung des ersten und/oder des zweiten Sekundärrohstoffs als C-Träger für die Konditionierung der Asche- und/oder Schlackefraktion genutzt werden.

Bei einer weiteren bevorzugten Ausführungsform wird als Ca- und/oder C-Träger ein Sekundärrohmaterial, vorzugsweise ein biomineralisierter Apatit, insbesondere Tiermehl, Blutmehl oder Fleischknochenmehl, verwendet. Vor allem Tiermehl weist eine günstige chemische Zusammensetzung für die Aufbereitung der Asche- und/oder Schlackefraktion auf.

Die Erfindung wird nachstehend anhand in den Zeichnungen gezeigten, nicht einschränkenden Ausführungsbeispielen weiter erläutert.
Fig. 1 zeigt ein Funktionsschema eines erfindungsgemäßen Zementwerkes, bei welchem im Wesentlichen phosphorfreie Veraschungs- und/oder Verschlackungsrückstände erzeugt werden, welche als Sekundärrohstoff für die Zementproduktion verwendet werden.
Fig. 2 zeigt im Detail verschiedene Aufgabestellen für den Sekundärrohstoff in dem Zementwerk.
Fig. 3 zeigt ein Funktionsschema einer weiteren Ausführungsform des Zementwerkes.

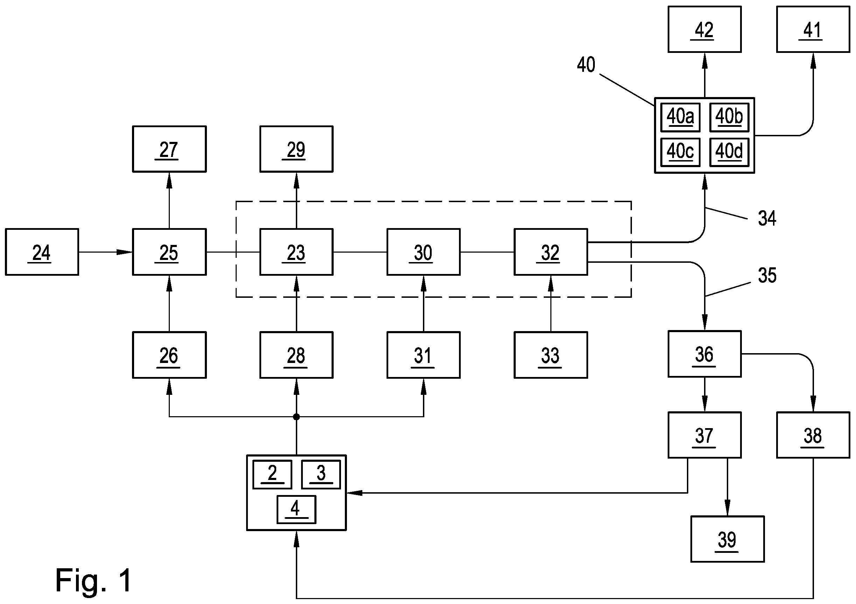

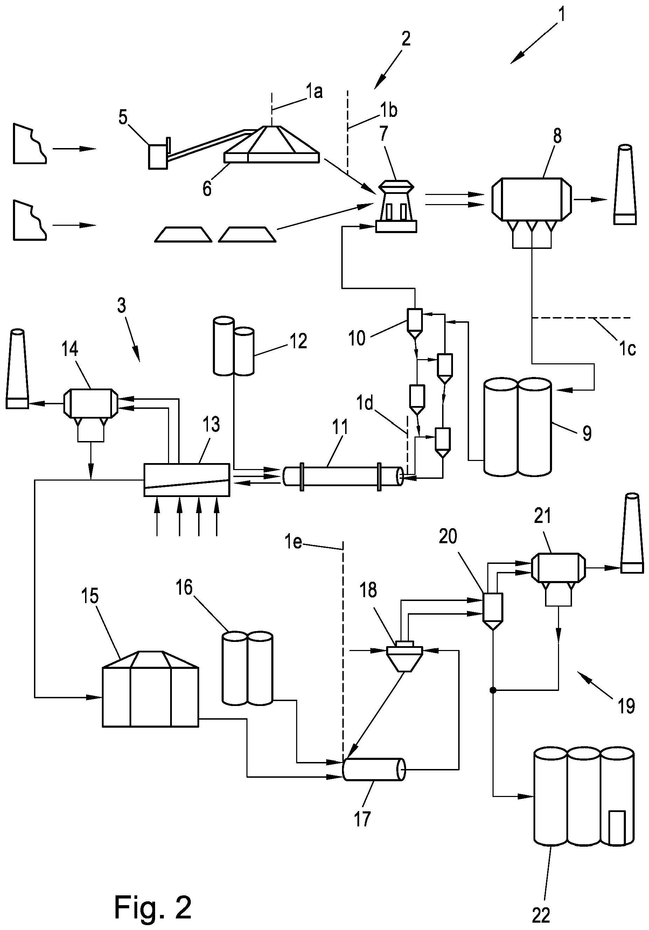

In den Fig. 1 und 2 ist schematisch ein Zementwerk 1 zur Zementproduktion gezeigt. Wie im Stand der Technik hinlänglich bekannt, weist das Zementwerk 1 eine Anlage 2 zur Herstellung von Rohmehl, eine Anlage 3 zur Herstellung von Zementklinker aus dem Rohmehl und eine Anlage 4 zur Herstellung von Zement aus dem Zementklinker auf. Die Anlage 2 zur Herstellung von Rohmehl weist, wie in Fig. 2 ersichtlich, einen Brecher 5 zum Zerkleinern von Rohstoffen, ein Mischbett 6, insbesondere ein Rundmischbett, zum Lagern und Homogenisieren der Rohstoffe, eine Mühle 7, insbesondere eine Rohmehlmühle, zum Trocknen und Mahlen der Rohstoffe, einen Filter 8, insbesondere einen Elektrofilter, zur Abgasreinigung, und einen Silo 9 zum Lagern und Homogenisieren des Rohmehls in Materialflussrichtung gesehen nach dem Filter 8, auf. Der Anlage 2 zur Herstellung von Rohmehl ist die Anlage 3 zur Herstellung von Zementklinker aus dem Rohmehl nachgeschaltet. Die Anlage 3 zur Herstellung von Zementklinker weist, wie in Fig. 2 ersichtlich, einen Vorwärmer 10, insbesondere einen Zyklonvorwärmer, zum Erhitzen des Rohmehls, einen Drehrohrofen 11 zur Herstellung von Zementklinker, ein Brennstoffsilo 12 zur Lagerung des Brennstoffs des Drehrohrofens 11, einen Klinkerkühler 13 zum Kühlen des Zementklinkers, einen Filter 14 zur Abgasreinigung, und einen Klinkersilo 15 zum Lagern und Homogenisieren des Zementklinkers, auf. Der Anlage 3 zur Herstellung von Zementklinker ist die Anlage 4 zur Herstellung von Zement aus dem Zementklinker nachgeschaltet, die gemäß Fig. 2 ein Lager 16 zur Lagerung von Zusatzstoffen, die für die Herstellung des Zements benötigt werden, eine Mühle 17, insbesondere eine Kugelmühle, zum Mahlen des Zementklinkers und der Zusatzstoffe, einen Sichter 18 zur Klassierung des Zements, eine Abgasreinigung 19, insbesondere bestehend aus einem Zyklonabscheider 20 und einem Elektroabscheider 21, und Silos 22 zum Lagern des Zements, aufweist. Diese Bestandteile des Zementwerkes 1 sind im Stand der Technik hinlänglich bekannt, so dass sich nähere Ausführungen dazu erübrigen können.

In einer gezeigten Ausführungsform gemäß Fig. 1 weist das Zementwerk 1 eine Veraschungs- und Verschlackungsanlage 23 zur Erzeugung einer phosphorhaltigen Aschefraktion aus einem phosphorhaltigen Ausgangsstoff (Sekundärrohstoff) 24 auf. Als phosphorhaltiger Ausgangsstoff 24 ist insbesondere Klärschlamm, aber auch Industrieschlamm, Bioschlamm, biogene Stoffe, insbesondere Tiermehl, oder deren Gemisch vorgesehen. Das Zementwerk 1 weist in der gezeigten Ausführungsform gemäß Fig. 1 einen Trockner 25 auf, in dem der phosphorhaltige Ausgangsstoff 24 bei 100 °C bis 400 °C mithilfe einer Abwärme 26 aus der Anlage 3 zur Herstellung von Zementklinker, beispielsweise aus dem Drehrohrofen 11, getrocknet wird, wobei der Energieinhalt der bei der Trocknung entstehenden Abluft 27 im Zementwerk 1 weiter genutzt werden kann. Der getrocknete phosphorhaltige Ausgangsstoff 24 wird nach dem Trockner 25 in der Veraschungs- und Verschlackungsanlage 23 durch Veraschung bzw. Verschlackung bei 900 °C in eine phosphorhaltige Asche- und Schlackefraktion umgewandelt. Je nach Anwendung kann die Veraschungs- und Verschlackungsanlage 23 als Vergasungs- oder Verbrennungsanlage ausgeführt sein. In der gezeigten Ausführungsform gemäß Fig. 1 wird die Veraschung bzw. Verschlackung in der Veraschungs- und Verschlackungsanlage 23 durch einen Gasstrom 28, welcher ein Abgasstrom oder Abluftstrom aus der Anlage 3 zur Herstellung von Zementklinker ist, unterstützt. Der Gasstrom 28 kann beispielsweise vom Drehrohrofen 11 abgezogen werden. Der Energieinhalt der bei der Veraschung bzw. Verschlackung gebildeten Gase kann im Zementwerk 1 weiter genutzt werden. Im Fall der Vergasung kann bei der Veraschung bzw. Verschlackung ein Brenngas 29 gebildet werden, welches Kohlenmonoxid (CO), Wasserstoff (H₂), Kohlendioxid (CO₂), Methan (CH₄), Wasserdampf (H₂O) sowie eine Reihe von organischen Substanzen enthalten kann.

Das Zementwerk 1 weist in der gezeigten Ausführungsform gemäß Fig. 1 einen Reaktor 30 zur Konditionierung der phosphorhaltigen Asche- und Schlackefraktion mit Ca- und/oder C-Trägern bei 1200 °C auf. Als Ca- und/oder C-Träger wird bei der gezeigten Ausführungsform ein Hilfsstoff 31 aus der Anlage 2 zur Herstellung von Rohmehl, der Anlage 3 zur Herstellung von Zementklinker oder der Anlage 4 zur Herstellung von Zement verwendet. Der Hilfsstoff 31 ist beispielsweise Flugasche, insbesondere mit einem Anteil Restkoks von zumindest 10 m% Bypassstaub, Vorwärmerkalk und/oder Blaukalk. Die Temperatur der phosphorhaltigen Asche- und Schlackefraktion wird nach dem Austritt aus dem Reaktor 30 zur Konditionierung der phosphorhaltigen Asche- und Schlackefraktion auf 900 °C gehalten, um den Energiebedarf für die Herstellung des im Wesentlichen phosphorfreien Sekundärrohstoffs möglichst gering zu halten.

In der gezeigten Ausführungsform weist das Zementwerk 1 einen Reaktor 32 zur Bildung eines phosphorhaltigen Gasstroms und im Wesentlichen phosphorfreier Veraschungs- und Verschlackungsrückstände bei 1500 °C auf, der dem Reaktor 30 zur Konditionierung der phosphorhaltigen Asche- und Schlackefraktion nachgeschaltet ist. Im Reaktor 32 werden beispielsweise, wie aus EP 2 640 531 an sich bekannt, mithilfe eines Koks- und/oder Graphitbetts, die in der phosphorhaltigen Asche- und Schlackefraktion vorhandenen Metalloxide, wie Eisenoxide, reduziert. Durch die Kohlenstoff-(C)-Träger kann das reduzierende Verhalten der phosphorhaltigen Asche- und Schlackefraktion bei der Erhitzung im Reaktor 32 sichergestellt werden. Die Beheizung des Koks- und/oder Graphitbetts erfolgt in der gezeigten Ausführung induktiv durch eine Spule, wobei welche mit einer Energiequelle 33 verbunden ist. Der im Reaktor 32 gebildete phosphorhaltige Gasstrom wird über eine erste Ableitung 34 aus dem Reaktor 32 ausgetragen. Die thermische Behandlung im Reaktor 30 erfolgt bei einem Luftverhältnis von 0,4 ≤ λ ≤ 1,5. Durch die Calcium-(Ca)-Träger kann bei der Prozesstemperatur im Reaktor 32 eine flüssige Schlacke gebildet werden, welche die im Wesentlichen phosphorfreien Veraschungs- und Verschlackungsrückstände bildet. Die im Wesentlichen phosphorfreien Veraschungs- und Verschlackungsrückstände des Reaktors 32 beinhalten reduzierte Eisen-haltige Fraktionen sowie Silizium-, Calcium- und Aluminium-haltige Fraktionen und werden über eine zweite Ableitung 35 aus dem Reaktor ausgetragen.

In der gezeigten Ausführungsform weist das Zementwerk 1 zudem eine Schlackenkonditionierung 36 auf, die dem Reaktor 32 über die zweite Ableitung 35 nachgeschaltet ist. In der Schlackenkonditionierung 36 werden die im Wesentlichen phosphorfreien Veraschungs- und Verschlackungsrückstände des Reaktors 32 in eine eisenhaltige Fraktion 37 und eine Si/Ca/Al-haltige Fraktion 38 mittels Granulation getrennt. Die eisenhaltige Fraktion 37 und die Si/Ca/Al-haltige Fraktion 38 können jeweils zumindest teilweise der Anlage 2 zur Herstellung von Rohmehl, der Anlage 3 zur Herstellung von Zementklinker und/oder der Anlage 4 zur Herstellung von Zement zugeführt werden. Gemäß der gezeigten Ausführungsform in Fig. 1 kann ein weiterer Anteil der eisenhaltigen Fraktion einem Eisenwerk 39 zugeführt werden.

In der gezeigten Ausführungsform gemäß Fig. 1 weist das Zementwerk 1 eine Nachbehandlungsanlage 40 auf, die dem Reaktor 32 über die erste Ableitung 34 nachgeschaltet ist. Die Nachbehandlungsanlage 40 weist beispielsweise einen Wärmetauscher 40a zum Abkühlen des phosphorhaltigen Gasstromes, einen Abscheider 40b zum Abscheiden der im phosphorhaltigen Gasstrom enthaltenen Schwermetalle 41, eine Nachverbrennung 40c zur Gewinnung von Phosphorsäure und Phosphorpentoxid durch Oxidation von elementarem Phosphor und einen Wäscher 40d zur Abscheidung der phosphorhaltigen Stoffe 42 wie Phosphorsäure, Phosphorpentoxid und elementarer Phosphor, auf.

Gemäß Fig. 2 kann der Sekundärrohstoff aus den im Wesentlichen phosphorfreien Veraschungs- und Verschlackungsrückständen an fünf verschiedenen Stellen 1a bis 1e bei der Zementklinker- und der Zementproduktion im Zementwerk 1 aufgegeben werden. Demnach kann der Sekundärrohstoff aus den im Wesentlichen phosphorfreien Veraschung- und Verschlackungsrückständen
a. auf ein Mischbett 6 des Zementwerkes (vgl. Linie 1a) und/oder
b. in Strömungsrichtung gesehen nach dem Mischbett 6 und vor einer Rohmehlmühle 7 des Zementwerkes 1 (vgl. Linie 1b) und/oder
c. in Strömungsrichtung zwischen dem Filter 8 und dem Silo 9 (vgl. Linie 1c) und/oder
d. in einen Ofeneinlauf des Drehrohrofens 11 oder in einen Kalzinator des Zementwerkes 1 (vgl. Linie 1d) und/oder
e. in eine Zementmühle 17 des Zementwerkes 1 (vgl. Linie 1e) aufgegeben werden.

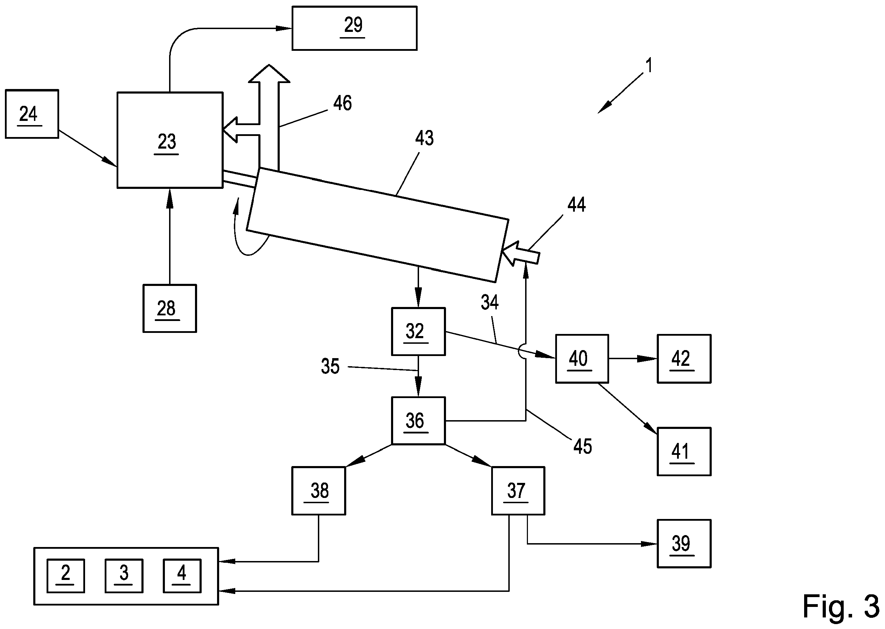

In einer weiteren Ausführungsform gemäß Fig. 3 ist der Reaktor 30 zur Konditionierung der phosphorhaltigen Asche- und Schlackefraktion als Drehrohr 43 ausgeführt, wobei die notwendige Energie zur Konditionierung der phosphorhaltigen Asche- und Schlackefraktion eine Refuse-Derived-Fuel-(RDF)-Feuerung 44 liefert. Als Verbrennungsluft der RDF-Feuerung wird eine Abluft 45 der Schlackenkonditionierung 36 verwendet. Zur Nutzung der Abwärme werden gemäß der Ausführungsform in Fig. 3 die Abgase 46 des Drehrohres 43 in der Veraschungsanlage 23 zur Vorwärmung und/oder Trocknung des phosphorhaltigen Ausgangsstoffs 24 und/oder zur Erwärmung von Veraschungsluft für die Veraschung bzw. Verschlackung herangezogen.

In der gezeigten Ausführungsform gemäß Fig. 3 wird beim Reaktor 43 als Ca- und/oder C-Träger zur Konditionierung der phosphorhaltigen Asche- und Schlackefraktion ein Sekundärrohmaterial, wie biomineralisierter Apatit, beispielsweise Tiermehl, Blutmehl oder Fleischknochenmehl, verwendet. Vor allem Tiermehl weist eine günstige chemische Zusammensetzung für die Aufbereitung der Asche- und Schlackefraktion auf.

## Patentansprüche

1. Verfahren zum Verwerten eines phosphorhaltigen Ausgangsstoffes (24) bei der Zementproduktion in einem Zementwerk (1), mit den Schritten:
i. Erhitzen einer phosphorhaltigen Asche- und/oder Schlackefraktion aus dem phosphorhaltigen Ausgangsstoff auf zumindest 1250 °C, vorzugsweise zumindest 1300 °C, besonders bevorzugt zumindest 1400 °C, insbesondere im Wesentlichen 1500 °C, zur Bildung eines phosphorhaltigen Materialstroms, insbesondere eines phosphorhaltigen Gasstroms, und im Wesentlichen phosphorfreier Veraschungs- und/oder Verschlackungsrückstände;
ii. Auftrennen des phosphorhaltigen Materialstroms, insbesondere des phosphorhaltigen Gasstroms, und der im Wesentlichen phosphorfreien Veraschungs- und/oder Verschlackungsrückstände;
iii. Gewinnen von elementarem Phosphor, Phosphorpentoxid und/oder Phosphorsäure aus dem phosphorhaltigen Materialstrom;
iv. Erzeugen einer Eisen-Fraktion (37) aus den im Wesentlichen phosphorfreien Veraschungs- und/oder Verschlackungsrückständen, wobei die Eisen-Fraktion (37) zumindest 50 m% Eisen aufweist;
v. Erzeugen einer Si/Ca/Al-Fraktion (38) aus den im Wesentlichen phosphorfreien Veraschungs- und/oder Verschlackungsrückständen, wobei die Elemente Silizium, Calcium und Aluminium in der Si/Ca/Al-haltigen Fraktion (38) als jeweilige Oxide vorliegen, wobei die Si/Ca/Al-haltige Fraktion einen Siliziumoxid-Anteil von weniger als 60 m%, einen Calciumoxid-Anteil von mehr als 25 m% und einen Aluminiumoxid-Anteil von weniger als 30 m%, bezogen auf die Gesamtmenge der Si/Ca/Al-haltigen Fraktion, aufweist, wobei die Summe der Massenanteile des Silizium-, des Calcium- und des Aluminiumoxids mehr als 55 m%, bezogen auf die Gesamtmenge der Si/Ca/Al-haltigen Fraktion (38), ist;
vi. Verwenden eines ersten Anteils der Si/Ca/Al-Fraktion (38) als erster Sekundärrohstoff für die Zementproduktion und
vii. Verwenden eines ersten Anteils der Eisen-Fraktion (37) als zweiter Sekundärrohstoff für die Zementproduktion.

2. Verfahren nach Anspruch 1, **dadurch gekennzeichnet, dass** die phosphorhaltige Asche- und/oder Schlackefraktion im Zementwerk (1) durch Veraschung bzw. Verschlackung des phosphorhaltigen Ausgangsstoffs (24) gebildet wird.

3. Verfahren nach Anspruch 1 oder 2, **dadurch gekennzeichnet, dass** der erste Anteil der Si/Ca/Al-Fraktion (37) als Zumahlstoff in eine Zementmühle (17) des Zementwerkes (1) aufgegeben wird.

4. Verfahren nach einem der Ansprüche 1 bis 3, **gekennzeichnet durch** das Verwenden eines zweiten Anteils der Si/Ca/Al-Fraktion (38) als dritter Sekundärrohstoff und/oder eines zweiten Anteils der Eisen-Fraktion (37) als vierter Sekundärrohstoff für die Zementklinkerproduktion, wobei der zweite Anteil der Si/Ca/Al-Fraktion (38) und/oder der zweite Anteil der Eisen-Fraktion (38)
a. auf ein Mischbett (6) des Zementwerkes (1) und/oder
b. in Strömungsrichtung gesehen nach dem Mischbett (6) und vor einer Rohmehlmühle (7) des Zementwerkes (1) und/oder
c. in einen Ofeneinlauf des Drehrohrofens (11) oder in einen Kalzinator des Zementwerkes (1)
aufgegeben wird.

5. Verfahren nach einem der Ansprüche 1 bis 4, **dadurch gekennzeichnet, dass** ein weiterer Anteil der Eisen-Fraktion (37) aus dem Zementwerk (1) ausgeschleust wird.

6. Verfahren nach einem der Ansprüche 1 bis 5, **dadurch gekennzeichnet, dass** die Veraschung bzw. Verschlackung des phosphorhaltigen Ausgangsstoffs (24) durch einen bei der Zementklinkerproduktion entstehenden Gasstrom (28), insbesondere Abgasstrom oder Abluftstrom, zumindest unterstützt wird.

7. Verfahren nach einem der Ansprüche 1 bis 6, **dadurch gekennzeichnet, dass** bei der Veraschung bzw. Verschlackung des phosphorhaltigen Ausgangsstoffs (24) ein Brenngas (29) gebildet wird.

8. Verfahren nach einem der Ansprüche 1 bis 7, **dadurch gekennzeichnet, dass** der phosphorhaltige Materialstrom flüssig ist, wobei der phosphorhaltige Materialstrom und die im Wesentlichen phosphorfreien Veraschungs- und/oder Verschlackungsrückstände mithilfe einer Dichtetrennung aufgetrennt werden.

9. Verfahren nach einem der Ansprüche 1 bis 8, **dadurch gekennzeichnet, dass** die phosphorhaltige Asche- und/oder Schlackefraktion auf einer Temperatur von zumindest 300 °C, vorzugsweise zumindest 500 °C, besonders bevorzugt zumindest 700 °C, insbesondere zumindest 900 °C, gehalten wird, bevor die phosphorhaltige Asche- und/oder Schlackefraktion auf zumindest 1250 °C erhitzt wird.

10. Verfahren nach einem der Ansprüche 1 bis 9, **dadurch gekennzeichnet, dass** die phosphorhaltige Asche- und/oder Schlackefraktion vor der Erhitzung auf zumindest 1250 °C mit Ca- und/oder C-Trägern konditioniert wird.

11. Verfahren nach Anspruch 10, **dadurch gekennzeichnet, dass** die Konditionierung der phosphorhaltigen Asche- und/oder Schlackefraktion in einem Drehrohr (43) durchgeführt wird.

12. Verfahren nach Anspruch 10 oder 11, **dadurch gekennzeichnet, dass** die Abgase (46) aus dem Drehrohr (43) zur Vorwärmung und/oder Trocknung des phosphorhaltigen Ausgangsstoffs (24) und/oder zur Erwärmung von Veraschungsluft (28) für die Veraschung bzw. Verschlackung herangezogen wird.

13. Zementwerk (1) zur Zementproduktion, aufweisend
- eine Anlage (4) zur Herstellung von Zement aus Zementklinker;
- einen Reaktor (32) zur Bildung eines phosphorhaltigen Materialstroms, insbesondere eines phosphorhaltigen Gasstroms, und im Wesentlichen phosphorfreier Veraschungs- und/oder Verschlackungsrückstände durch Erhitzung einer phosphorhaltigen Asche- und/oder Schlackefraktion aus einem phosphorhaltigen Ausgangsstoff auf zumindest 1250 °C, vorzugsweise zumindest 1300 °C, besonders bevorzugt zumindest 1400 °C, insbesondere im Wesentlichen 1500 °C;
- eine erste Ableitung (34) für den phosphorhaltigen Materialstrom, insbesondere phosphorhaltigen Gasstrom, für das Gewinnen von elementarem Phosphor, Phosphorpentoxid und/oder Phosphorsäure aus dem phosphorhaltigen Materialstrom;
- eine zweite Ableitung (35) für die im Wesentlichen phosphorfreien Veraschungs- und/oder Verschlackungsrückstände,
- eine Trenneinrichtung zum Erzeugen jeweils einer Eisen-Fraktion (37) und einer Si/Ca/Al-Fraktion (38) aus den im Wesentlichen phosphorfreien Veraschungs- und/oder Verschlackungsrückständen, wobei die Eisen-Fraktion (37) zumindest 50 m% Eisen aufweist, wobei die Elemente Silizium, Calcium und Aluminium in der Si/Ca/Al-haltigen Fraktion (38) als jeweilige Oxide vorliegen, wobei die Si/Ca/Al-haltige Fraktion einen Siliziumoxid-Anteil von weniger als 60 m%, einen Calciumoxid-Anteil von mehr als 25 m% und einen Aluminiumoxid-Anteil von weniger als 30 m%, bezogen auf die Gesamtmenge der Si/Ca/Al-haltigen Fraktion, aufweist, wobei die Summe der Massenanteile des Silizium-, des Calcium- und des Aluminiumoxids mehr als 55 m%, bezogen auf die Gesamtmenge der Si/Ca/Al-haltigen Fraktion (38), ist,
- wobei die Trenneinrichtung mit der Anlage (2) zur Herstellung von Zement verbunden ist, so dass ein erster Anteil der Si/Ca/Al- Fraktion (38) als erster Sekundärrohstoff für die Zementproduktion und ein erster Anteil der Eisen-Fraktion (37) als zweiter Sekundärrohstoff für die Zementproduktion verwendbar ist.

## Claims

1. Method for utilising a phosphorus-containing starting material (24) during cement production in a cement works (1), comprising the following steps:
i. heating a phosphorus-containing ash and/or slag fraction from the phosphorus-containing starting material to at least 1250°C, preferably at least 1300°C, in particular preferably at least 1400°C, in particular substantially 1500°C, to form a phosphorus-containing material flow, in particular a phosphorus-containing gas flow, and substantially phosphorus-free incineration and/or slagging residues;
ii. separating the phosphorus-containing material flow, in particular the phosphorus-containing gas flow, and the substantially phosphorus-free incineration and/or slagging residues;
iii. recovering elemental phosphorus, phosphorus pentoxide and/or phosphoric acid from the phosphorus-containing material flow;
iv. producing an iron fraction (37) from the substantially phosphorus-free incineration and/or slagging residues, wherein the iron fraction (37) has at least 50% by mass iron;
v. producing a Si/Ca/Al fraction (38) from the substantially phosphorus-free incineration and/or slagging residues, wherein the elements silicon, calcium and aluminium are present as respective oxides in the Si/Ca/Al-containing fraction (38), wherein the Si/Ca/Al-containing fraction has a silicon oxide portion of less than 60% by mass, a calcium oxide portion of more than 25% by mass and an aluminium oxide portion of less than 30% by mass, based on the total amount of Si/Ca/Al-containing fraction, wherein the sum of the mass portion of silicon, calcium and aluminium oxide is more than 55% by mass, based on the total amount of the Si/Ca/Al-containing fraction (38);
vi. using a first portion of the Si/Ca/Al fraction (38) as a first secondary raw material for cement production and
vii. using a first portion of the iron fraction (37) as a second secondary raw material for cement production.

2. Method according to claim 1, **characterised in that** the phosphorus-containing ash and/or slag fraction is formed in the cement works (1) by incinerating and/or slagging the phosphorus-containing starting material (24).

3. Method according to either claim 1 or claim 2, **characterised in that** the first portion of the Si/Ca/Al fraction (37) is fed into a cement mill (17) of the cement works (1) as an additive.

4. Method according to any of claims 1 to 3, **characterised by** using a second portion of the Si/Ca/Al fraction (38) as a third secondary raw material and/or a second portion of the iron fraction (37) as a fourth secondary raw material for cement clinker production, the second portion of the Si/Ca/Al fraction (38) and/or the second portion of the iron fraction (38) being fed
a. onto a mixed bed (6) of the cement works (1) and/or
b. downstream of the mixed bed (6) and upstream of a raw meal mill (7) of the cement works (1) seen in the flow direction and/or
c. into a furnace inlet of the rotary kiln (11) or into a calciner of the cement works (1).

5. Method according to any of claims 1 to 4, **characterised in that** a further portion of the iron fraction (37) is discharged from the cement works (1).

6. Method according to any of claims 1 to 5, **characterised in that** the incineration and/or slagging of the phosphorus-containing starting material (24) is at least supported by a gas flow (28), in particular an exhaust gas flow or exhaust air flow, arising during cement clinker production.

7. Method according to any of claims 1 to 6, **characterised in that** a fuel gas (29) is formed when incinerating and/or slagging the phosphorus-containing starting material (24).

8. Method according to any of claims 1 to 7, **characterised in that** the phosphorus-containing material flow is liquid, the phosphorus-containing material flow and the substantially phosphorus-free incineration and/or slagging residues being separated with the aid of a density separation.

9. Method according to any of claims 1 to 8, **characterised in that** the phosphorus-containing ash and/or slag fraction is kept at a temperature of at least 300°C, preferably at least 500°C, in particular preferably at least 700°C, in particular at least 900°C before the phosphorus-containing ash and/or slag fraction is heated to at least 1250°C.

10. Method according to any of claims 1 to 9, **characterised in that** the phosphorus-containing ash and/or slag fraction is conditioned with Ca and/or C carriers before heating to at least 1250°C.

11. Method according to claim 10, **characterised in that** the conditioning of the phosphorus-containing ash and/or slag fraction is carried out in a rotary tube (43).

12. Method according to either claim 10 or claim 11, **characterised in that** the exhaust gases (46) from the rotary tube (43) are used to preheat and/or dry the phosphorus-containing starting material (24) and/or to heat incineration air (28) for incineration and/or slagging.

13. Cement works (1) for cement production, comprising
- a plant (4) for producing cement from cement clinker;
- a reactor (32) for forming a phosphorus-containing material flow, in particular a phosphorus-containing gas flow, and substantially phosphorus-free incineration and/or slagging residues by heating a phosphorus-containing ash and/or slag fraction from a phosphorus-containing starting material to at least 1250°C, preferably at least 1300°C, in particular preferably at least 1400°C, in particular substantially 1500°C;
- a first discharge line (34) for the phosphorus-containing material flow, in particular phosphorus-containing gas flow, for the recovery of elemental phosphorus, phosphorus pentoxide and/or phosphoric acid from the phosphorus-containing material flow;
- a second discharge line (35) for the substantially phosphorus-free incineration and/or slagging residues,
- a separating device for producing an iron fraction (37) and a Si/Ca/Al fraction (38) in each case from the substantially phosphorus-free incineration and/or slagging residues, wherein the iron fraction (37) comprises at least 50% by mass iron, wherein the elements silicon, calcium and aluminium are present in the Si/Ca/Al-containing fraction (38) as respective oxides, wherein the Si/Ca/Al-containing fraction has a silicon oxide portion of less than 60% by mass, a calcium oxide portion of more than 25% by mass and an aluminium oxide portion of less than 30% by mass, based on the total amount of the Si/Ca/Al-containing fraction, wherein the sum of the mass portions of silicon, calcium and aluminium oxide are more than 55% by mass, based on the total amount of the Si/Ca/Al-containing fraction (38),
- wherein the separating device is connected to the plant (2) for producing cement, so that a first portion of the Si/Ca/Al fraction (38) can be used as a first secondary raw material for cement production and a first portion of the iron fraction (37) as a second secondary raw material for cement production.

## Revendications

1. Procédé pour le recyclage d'un matériau de départ contenant du phosphore (24) lors de la production de ciment dans une cimenterie (1), avec les étapes consistant à :
i. chauffer une fraction de cendres et/ou de scorification contenant du phosphore de la matière première contenant du phosphore à au moins 1250°C, de préférence au moins 1300°C, de manière particulièrement préférée au moins 1400°C, en particulier essentiellement 1500°C, pour former un flux de matières contenant du phosphore, notamment un flux de gaz contenant du phosphore, et des résidus d'incinération et/ou de scorification essentiellement exempts de phosphore ;
ii. séparer le flux de matières contenant du phosphore, en particulier le flux de gaz contenant du phosphore, et les résidus d'incinération et/ou de scorification essentiellement exempts de phosphore ;
iii. récupérer le phosphore élémentaire, le pentoxyde de phosphore et/ou l'acide phosphorique du flux de matière contenant du phosphore ;
iv. produire une fraction de fer (37) à partir des résidus d'incinération et/ou de scorification essentiellement exempts de phosphore, la fraction de fer (37) présentant au moins 50% en masse de fer ;
v. produire une fraction de Si/Ca/Al (38) à partir des résidus d'incinération et/ou de scorification essentiellement exempts de phosphore, les éléments silicium, calcium et aluminium étant présents sous forme d'oxydes respectifs dans la fraction contenant Si/Ca/Al (38), la fraction contenant Si/Ca/Al présentant une teneur en oxyde de silicium inférieure à 60% en masse, une teneur en oxyde de calcium supérieure à 25% en masse et une teneur en oxyde d'aluminium inférieure à 30 % en masse, sur la base de la quantité totale de la fraction contenant Si/Ca/Al, avec la somme des fractions massiques de silicium, de calcium et d'oxyde d'aluminium étant plus de 55% en masse, sur la base de la quantité totale de la fraction contenant Si/Ca/Al (38);
vi. utiliser une première partie de la fraction Si/Ca/Al (38) comme première matière première secondaire pour la production de ciment et
vii. utiliser une première partie de la fraction fer (37) comme deuxième matière première secondaire pour la production de ciment.

2. Procédé selon la revendication 1, **caractérisé en ce que** la fraction de cendres et/ou de scorification contenant du phosphore dans les cimenteries (1) est formé par incinération ou scorification de la matière de départ contenant du phosphore (24).

3. Procédé selon la revendication 1 ou 2, **caractérisé en ce que** la première partie de la fraction Si/Ca/Al (37) est introduite comme additif dans un broyeur à ciment (17) de la cimenterie (1).

4. Procédé selon l'une quelconque des revendications 1 à 3, **caractérisé en ce qu'**on utilise une deuxième partie de la fraction Si/Ca/Al (38) en tant que troisième matière première secondaire et/ou une deuxième partie de la fraction de fer (37) en tant que quatrième matière première secondaire pour la production de clinker de ciment, dans lequel la deuxième partie de la fraction Si/Ca/Al (38) et/ou la deuxième partie de la fraction de fer (38) est placé
a. sur un lit de mélange (6) de la cimenterie (1) et/ou
b. vu dans le sens de l'écoulement, en aval du lit de mélange (6) et en amont d'un broyeur de farine crue (7) de la cimenterie (1) et/ou,
c. dans une entrée de four du four rotatif (11) ou dans un calcinateur de la cimenterie (1).

5. Procédé selon l'une quelconque des revendications 1 à 4, **caractérisé en ce qu'**une autre partie de la fraction de fer (37) est évacuée de la cimenterie (1).

6. Procédé selon l'une quelconque des revendications 1 à 5, **caractérisé en ce que** l'incinération ou la scorification de la matière première contenant du phosphore (24) est au moins supportée par un flux gazeux (28) issu de la production de clinker de ciment, en particulier un flux de gaz d'échappement ou un flux d'air d'échappement.

7. Procédé selon l'une quelconque des revendications 1 à 6, **caractérisé en ce qu'**un gaz combustible (29) est formé lors de l'incinération ou du la scorification de la matière première contenant du phosphore (24).

8. Procédé selon l'une quelconque des revendications 1 à 7, **caractérisé en ce que** le flux de matière contenant du phosphore est liquide, le flux de matière contenant du phosphore et les résidus d'incinération et/ou de scorification essentiellement exempts de phosphore étant séparés à l'aide d'une séparation par densité.

9. Procédé selon l'une des revendications 1 à 8, **caractérisé en ce que** la fraction de cendres et/ou de scorification contenant du phosphore est maintenue à une température d'au moins 300°C, de préférence d'au moins 500°C, de manière particulièrement préférée d'au moins 700°C, en particulier à au moins 900°C, avant que la fraction de cendres et/ou de scorification contenant du phosphore ne soit chauffée à au moins 1250°C.

10. Procédé selon l'une quelconque des revendications 1 à 9, **caractérisé en ce que** la fraction de cendres et/ou de scorification contenant du phosphore est conditionnée avec des supports de Ca et/ou de C avant chauffage à au moins 1250°C.

11. Procédé selon la revendication 10, **caractérisé en ce que** le conditionnement de la fraction de cendres et/ou de scorification contenant du phosphore est réalisé dans un tube rotatif (43).

12. Procédé selon la revendication 10 ou 11, **caractérisé en ce que** le gaz d'échappement (46) du tube rotatif (43) est utilisé pour le préchauffage et/ou le séchage de la matière première contenant du phosphore (24) et/ou de chauffage de l'incinération de l'air (28) pour l'incinération ou la scorification.

13. Cimenterie (1) pour la production de ciment, comportant
- une installation (4) pour la production de ciment à partir de clinker de ciment;
- un réacteur (32) pour former un flux de matières contenant du phosphore, en particulier un flux de gaz contenant du phosphore, et des résidus d'incinération et/ou de scorification essentiellement exempts de phosphore par chauffage d'une fraction de cendres et/ou de scorification contenant du phosphore à partir d'un matériau de départ contenant du phosphore à au moins 1250°C, de préférence au moins 1300 °C, de manière particulièrement préférée au moins 1400°C, en particulier essentiellement 1500°C ;
- une première ligne d'évacuation (34) du flux de matière contenant du phosphore, notamment de flux de gaz phosphoré, pour la récupération du phosphore élémentaire, du pentoxyde de phosphore et/ou de l'acide phosphorique du flux de matière contenant du phosphore ;
- une deuxième ligne d'évacuation (35) pour les résidus d'incinération essentiellement exempts de phosphore et/ou de scorification,
- un dispositif de séparation pour produire une fraction de fer (37) et une fraction Si/Ca/Al (38) à partir des résidus de l'incinération et/ou de la scorification essentiellement exempte de phosphore, la fraction de fer (37) présentant au moins 50% en poids de fer, les éléments silicium, calcium et aluminium de la fraction contenant Si/Ca/Al (38) étant présents sous forme d'oxydes respectifs, la fraction contenant le Si/Ca/Al a une teneur en oxyde de silicium de moins de 60% en masse, une teneur en oxyde de calcium de plus de 25% en masse et une teneur en oxyde d'aluminium de moins de 30 % en masse, sur la base de la quantité totale de fraction contenant Si/Ca/Al, la somme des fractions massiques d'oxyde de silicium, de calcium et d'aluminium étant supérieure à 55% en masse, sur la base de la quantité totale de la fraction contenant Si/Ca/Al (38),
- dans lequel le dispositif de séparation est relié à l'installation (2) pour la production de ciment de sorte qu'une première partie de la fraction Si/Ca/Al (38) peut être utilisée comme première matière secondaire pour la production de ciment et qu'une première partie de la fraction de fer (37) peut être utilisée comme deuxième matière première secondaire pour la production de ciment.
